**Europäisches Patentamt**

(19) **European Patent Office**

**Office européen des brevets**

(11) Veröffentlichungsnummer: **0 075 841**
**B1**

(12) **EUROPÄISCHE PATENTSCHRIFT**

(45) Veröffentlichungstag der Patentschrift:
14.08.85

(51) Int. Cl.⁴: **C 04 B 35/58, B 01 J 15/00**

(21) Anmeldenummer: 82108723.6

(22) Anmeldetag: 21.09.82

(54) Verfahren zur Regelung von Gasreaktionen mit festen Stoffen.

(30) Priorität: 26.09.81 DE 3138436

(43) Veröffentlichungstag der Anmeldung:
06.04.83 Patentblatt 83/14

(45) Bekanntmachung des Hinweises auf die Patenterteilung:
14.08.85 Patentblatt 85/33

(84) Benannte Vertragsstaaten:
**BE DE FR GB IT**

(56) Entgegenhaltungen:
**US - A - 3 854 882**

**AMERICAN CERAMIC SOCIETY BULLETIN, Band 60, Nr. 6, Juni 1981, Seiten 613-617, Columbus, Ohio, US J.A. MANGELS: "Effect of rate-Controlled nitriding and nitriding atmospheres on the formation of reaction-bonded Si3N4**
**AMERICAN CERAMIC SOCIETY BULLETIN, Band 57, Nr. 5, Mai 1978, Seiten 525-526, Columbus, Ohio, US P. WONG et al.: "Procedure for fabrication of Si3N4 by rate-controlled reaction sintering"**

(73) Patentinhaber: **Degussa Aktiengesellschaft, Weissfrauenstrasse 9, D-6000 Frankfurt am Main 1 (DE)**

(72) Erfinder: **Hamann, Heinz, K., Bergstrasse 10a, D-6458 Rodenbach (DE)**
Erfinder: **Reber, Gerhard, Höhenstrasse 22, D-6460 Gelnhausen 2 (DE)**
Erfinder: **Lange, Ekkehard, Berlinerstrasse 34, D-6053 Obertshausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Keramische Bauteile finden vermehrt Einsatz im Maschinenbau, wenn die Teile besonders hohen Temperaturbeanspruchungen gerecht werden müssen. Bauteile auf der Basis von Siliziumnitrid finden beispielsweise Anwendung in der keramischen Gasturbine. Die Bearbeitung solcher Keramikteile ist aber nur mit Spezialwerkzeugen möglich und deshalb sehr kostspielig. Ein ökonomisches Verfahren für die Formgebung von Bauteilen mit komplizierter Geometrie ist daher das Spritzgiessen. Für reaktionsgesinterte Siliziumnitrid-Bauteile hat sich ein Herstellungsverfahren bewährt, bei dem eine aus Silizium-Pulver und Thermoplasten bestehende Spritzmasse durch Spritzgiessen zu beliebig geformten Bauteilen verarbeitet wird. Nach dem Entfernen des Thermoplastanteiles aus den Bauteilen werden die nunmehr nur noch aus Silizium bestehenden Formkörper bei Temperaturen von $\geqslant 1000°$ C unter einer Stickstoff-Atmosphäre in Siliziumnitrid verwandelt. Beim Nitridieren wird eine vorgegebene Temperaturkurve in einer vorgegebenen Reaktionszeit abgefahren. Zur Stabilisierung des Reaktionsablaufes wird im Ofen ständig ein gleichmässiger Druck aufrechterhalten.

Besonders wichtig für die Bauteilqualität ist es, dass während der Reaktion $3Si + 2N_2 \rightarrow Si_3N_4$, die exotherm abläuft, kein Silizium aufschmilzt. Gemäss der vorstehend beschriebenen Reaktionsführung ist dies nur durch eine flache Temperaturanstiegskurve möglich, die eine lange Reaktionszeit von mindestens 5 bis 10 d bedingt. Lange Reaktionszeiten führen aber oft dazu, dass die Reaktion schon vorzeitig zum Stillstand kommt und grössere Anteile von freiem Silizium im Bauteil verbleiben, die einen starken Festigkeitsabfall im Bauteil bedingen.

Eine kürzere Reaktionszeit kann man erreichen, indem man mit einer steileren Temperatur-Zeitkurve fährt und die Temperatur der Bauteile kontrolliert. Bei zu hoher Reaktionsgeschwindigkeit kann der Temperaturanstieg in den Bauteilen durch die Exothermie dazu genutzt werden, die Reaktion durch sofortige Senkung des Reaktionsgasdruckes zu bremsen. Ein Nachteil dieser Methode ist jedoch, dass die Temperaturmessung in Bauteilnähe die Exothermiewärme, die in Bauteilmitte am grössten ist, zu spät erfasst, so dass die Silizium-Aufschmelzungen im Innern der Bauteile trotzdem entstehen können. Dadurch wird die Bauteilfestigkeit aber erheblich reduziert.

Es war daher Aufgabe der vorliegenden Erfindung, ein Verfahren zur Regelung von Gasreaktionen mit festen Stoffen zu finden, insbesondere zur Nitridierung von Siliziumformkörpern, über den Druck des zugeführten Reaktionsgases in Reaktionsöfen mit vorgegebenen Temperatur-Zeit-Programm, wobei das Regelungsverfahren eine möglichst schnelle Reaktionsführung erlauben sollte, ohne das Auftreten von Reaktionsstillständen, Temperaturüberhöhungen mit Aufschmelzungen und nichtumgesetzten Ausgangsstoffen in den Bauteilen, die zu minderer Qualität führen.

Diese Aufgabe wurde erfindungsgemäss dadurch gelöst, dass neben einer Druckmessung auch eine Messung der verbrauchten Reaktionsgasmenge erfolgt und zur Regelung der Gasreaktion eingesetzt wird, in der Weise, dass ein für die Reaktionsführung optimaler Maximaldruck und eine für eine bestimmte Einsatzmenge an Reaktionsgut ermittelte Maximalmenge an Reaktionsgasdurchsatz in einen Grenzwertgeber eingegeben werden, wobei beim Erreichen der eingegebenen Maximalmenge zur Aufrechterhaltung des Maximaldrucks vom Grenzwertgeber das Temperatur-Zeit-Programm angehalten, die Druckregelung unterbrochen und eine um 10 bis 50% verminderte Reaktionsgasmenge dem Reaktionsgut zugeführt wird, die ein Durchlaufen eines Gasdrucks-Minimums bewirkt, bis beim Wiedererreichen des eingestellten Maximaldrucks der Grenzwertgeber das Temperatur-Zeit-Programm und die Druckregelung erneut startet.

Vorzugsweise beträgt die zugeführte verminderte Reaktionsgasmenge etwa 70% der Maximalmenge, d. h. es wird eine um etwa 30% verminderte Reaktionsgasmenge dem Reaktionsgut zugeführt.

Das erfindungsgemässe Regelungsverfahren besitzt zwei integrierte Regelungsarten, nämlich eine Druck- und eine Mengenregelung. Die Reaktionsführung erfolgt primär über eine Druckregelung des Reaktionsgases im Reaktionsofen. Die jeweils verbrauchte Reaktionsgasmenge pro Zeiteinheit wird gemessen. Der normale Fahrbereich der Reaktionsführung sieht eine Reaktionsgasmenge zwischen einer Normal- und einer Maximalmenge vor. Die Maximalmenge in l/h wird aus der Ofeneinsatzmenge an Reaktionsgut berechnet und noch mit einem Faktor, der die Bauteilgeometrie berücksichtigt und einmal durch Versuch ermittelt wird, korrigiert. Dieser Maximalwert wird wie auch der für die optimale Reaktionsführung optimale Maximaldruckwert an einem Grenzwertgeber fest eingestellt. Die Temperaturführung selbst erfolgt über eine relativ steile Temperatur-/Zeitkurve.

Die Normalmenge ist die Reaktionsgasmenge, die notwendig ist, um den eingestellten Maximaldruck im Reaktionsofen im normalen Fahrbereich aufrechtzuerhalten. Sie ist stets kleiner als die Maximalmenge.

Wird nun während des Ablaufs der Reaktion die im Grenzwertgeber eingestellte Maximalmenge zur Aufrechterhaltung des vorgegebenen Maximaldrucks benötigt, wird der Temperatur-/Zeit-Programm-Geber angehalten und die Druckregelung auf eine Mengeregelung umgeschaltet. In dieser Phase wird dem Prozess eine um 10 bis 50%, vorzugsweise um 30% verminderte Reaktionsgasmenge zugeführt. Dadurch sinkt der Reaktionsgasdruck im Ofen, die Reaktion wird abgebremst. Dabei ist es wichtig, dass die Reaktion nur graduell gebremst wird. Wird die Reaktionsgeschwindigkeit ein- oder mehrmals zu stark abgebremst, so dass sie neu angefahren werden muss, führt dies zu schwankenden Gefügefestigkeiten in den behandelten Bauteilen und damit zu Ausschuss.

Die abgebremste Reaktion führt nun zu einem geringeren Reaktionsgasverbrauch, so dass durch die Zugabe konstanter, weiterer Gasmengen der Druck im Reaktionsofen wieder auf den eingestellten Maximalwert ansteigt. Bei Erreichen des Maximaldruckwertes wird die Mengenregelung wieder durch die Druckregelung ersetzt, wobei der „normale Fahrbereich" mit einer Reaktionsgasmenge zwischen dem Normal- und dem berechneten Maximalwert wieder freigegeben wird. Gleichzeitig wird der Temperatur-/Zeit-Programm-Geber wieder gestartet.

Diese Regelung erlaubt eine maximale Reaktionsgeschwindigkeit bei präziser Anpassung an die Einsatzmenge unter Berücksichtigung der Geometriebesonderheiten des Reaktionsgutes. Die maximale Reaktionsgeschwindigkeit kann über den gesammten Temperaturbereich der Reaktion aufrechterhalten werden.

Bei der Herstellung von Formkörpern aus Siliziumnitrid konnte die Bauteilqualität durch diese optimierte Nitridierbrandführung wesentlich verbessert werden.

Folgende Beispiele sollen das erfindungsgemässe Verfahren näher erläutern:

1. Formkörper aus spritzgegossenem Silizium werden mit einem fest vorgegebenen Temperatur-/Zeit-Programm in einem Reaktionsofen nitridiert. Die Reaktionssteuerung erfolgt durch eine bekannte Druckregelung. Die Nitrierdauer beträgt bei Temperaturen zwischen 1050 und 1450° C 9 d. Die nitridierten Bauteile besitzen eine Festigkeit $\sigma B4 = 250$ N/mm², wobei keine sichtbaren Fehler auftreten. Die Gefügefestigkeit ist jedoch schwankend und man kann deutlich Anteile an freiem Silizium erkennen. Bei der bekannten Regelung erhält man also trotz langer Nitridierdauer keine optimalen Festigkeiten.

2. Formkörper gemäss Beispiel 1 werden bei den gleichen Temperaturen innerhalb von 5 d nitridiert. Die Bauteile besitzen dann eine Festigkeit von $\sigma B4 \leq 200$ N/mm². Man erkennt lokale Aufschmelzungen von Silizium im Gefüge und z. T. auch an der Oberfläche. Die Gefügefestigkeit ist schwankend, deutliche Anteile an freiem Silizium sind sichtbar. Die so hergestellten Bauteile sind daher nur bedingt für technische Anwendungen brauchbar.

3. Formkörper gemäss Beispiel 1 werden bei den gleichen Temperaturen innerhalb von 5 d mit dem erfindungsgemässen Verfahren der Druck- und Gasmengenregelung nitridiert. Man erhält Bauteile mit einer Festigkeit von $\sigma B4 = 310$ N/mm². Die Teile sind ohne sichtbaren Fehler, die Gefügefestigkeit ist wesentlich höher und gleichmässiger als bei den Bauteilen nach den Beispielen 1 und 2. Man findet nur sehr geringe Anteile an freiem Silizium.

## Patentansprüche

1. Verfahren zur Regelung von Gasreaktionen mit festen Stoffen, insbesondere zur Nitridierung von Siliziumformkörpern, über den Druck des zugeführten Reaktionsgases in Reaktionsöfen mit vorgegebenem Temperatur-Zeit-Programm, dadurch gekennzeichnet, dass neben einer Druckmessung auch eine Messung der verbrauchten Reaktionsgasmenge erfolgt und zur Regelung der Gasreaktion eingesetzt wird, in der Weise, dass ein für die Reaktionsführung optimaler Maximaldruck und eine für eine bestimmte Einsatzmenge am Reaktionsgut ermittelte Maximalmenge an Reaktionsgasdurchsatz in einen Grenzwertgeber eingegeben werden, wobei beim Erreichen der eingegebenen Maximalmenge zur Aufrechterhaltung des Maximaldrucks vom Grenzwertgeber das Temperatur-Zeit-Programm angehalten, die Druckregelung unterbrochen und eine um 10 bis 50% verminderte Reaktionsgasmenge dem Reaktionsgut zugeführt wird, die ein Durchlaufen eines Gasdruck-Minimums bewirkt, bis beim Wiedererreichen des eingestellten Maximaldrucks der Grenzwertgeber das Temperatur-Zeit-Programm und die Druckregelung erneut startet.

2. Verfahren zur Regelung von Gasreaktionen mit festen Stoffen nach Anspruch 1, dadurch gekennzeichnet, dass die zugeführte verminderte Reaktionsgasmenge etwa 70% der Maximalmenge beträgt.

## Claims

1. A process for regulating gas reactions with solid materials, particularly for nitriding of silicon mouldings, by means of the pressure of the reaction gas supplied to the reaction furnace which has a predetermined temperature-time programme, characterised in that, in addition to a pressure measurement, the quantity of gas used in the reaction is also measured and is used to regulate the gas reaction in the following way, a limiting value controller is programmed with an optimal maximum pressure for the course of the reaction and a maximum quantity for the reaction gas throughput determined for a particular quantity of material to be reacted charged to the furnace so that when the given maximum quantity for maintenance of the maximum pressure is reached, the limiting value controller stops the temperature-time programme, pressure regulation is discontinued and an amount of reaction gas which is reduced by 10 to 50% is supplied to the charge, which brings about a through flow of reduced gas pressure, until on reaching again the set maximum pressure, the limiting value controller starts the temperature-time programme and the pressure regulation again.

2. A process for regulating gas reactions with solid materials according to Claim 1, characterised in that the reduced amount of reaction gas supplied is about 70% of the maximum amount.

## Revendications

1. Procédé pour la régulation de réactions gazeuses avec des substances solides, en particulier pour la nitruration de pièces moulées de silicium, en ce qui concerne la pression du gaz réactif appliqué dans des fours réactionnels avec un programme température-temps préétabli, caractérisé par le fait que, en plus d'une mesure de la pression, on effectue et on utilise pour la régulation de la réaction gazeuse aussi une mesure de la quantité de gaz réactif consommée de façon telle que l'on ajuste sur un régulateur une pression maximale optimale pour la conduite de la réaction et une quantité maximale du débit de gaz réactif établie pour une quantité déterminée de charge de matière en réaction, par lequel, lorsque la quantité maximale ajustée est atteinte, pour maintenir la pression maximale, le régulateur arrête le programme température-temps, interrompt la régulation de la pression, et une quantité de gaz réactif réduite de 10 à 50% est appliquée à la matière en réaction, ce qui provoque un dépassement d'un minimum de pression de gaz, le régulateur rétablit à nouveau le programme température-temps et la régulation de la pression jusqu'à ce que la pression maximale ajustée soit atteinte.

2. Procédé pour la régulation de réactions gazeuses avec des substances solides selon la revendication 1, caractérisé par le fait que la quantité diminuée de gaz réactif appliquée correspond à environ 70% de la quantité maximale.